# EUROPEAN PATENT APPLICATION

(11) **EP 3 757 787 A1**
(43) Date of publication of application: **30.12.2020**
(21) Application number: 20180525.6
(22) Date of filing: 17.06.2020
(51) Int. Cl.: G06F 9/50

(54) **INFORMATION PROCESSING APPARATUS AND PROGRAM**

(30) Priority: 27.06.2019 JP 2019119681
(71) Applicant: FUJITSU LIMITED, Kanagawa 211-8588 (JP)
(72) Inventor: SAKURAI, Ryota, Kawasaki-shi, Kanagawa 211-8588 (JP); SUEYASU, Naoki, Kawasaki-shi, Kanagawa 211-8588 (JP); USUI, Tetsuzou, Kawasaki-shi, Kanagawa 211-8588 (JP); OHNO, Yasuyuki, Kawasaki-shi, Kanagawa 211-8588 (JP)
(74) Representative: Haseltine Lake Kempner LLP

(57) **Abstract**

An information processing apparatus includes a plurality of cores that perform a plurality of respective tasks in parallel; and a plurality of cache memories that are provided corresponding to each of the plurality of cores and that store data to be referred to by the corresponding task at the time of execution, and wherein at least one of the plurality of cores is configured to: specify, for each of the cores, an overlap between the data referred to by the task that has been executed at the time of execution and data to be referred to by the task that is not yet executed at the time of execution, and executes the task that is not yet executed in a core having the largest overlap among the plurality of cores.

## Description

### FIELD

The embodiments discussed herein are related to an information processing apparatus and a computer-readable recording medium.

### BACKGROUND

Non-uniform memory access (NUMA) is one of the architectures of a parallel computer. NUMA is an architecture in which a plurality of nodes, including cores and a main memory, are coupled by an interconnect, and the cores may access the main memory at high speed in the same node.

Each node in NUMA is also referred to as a NUMA node. The NUMA node is also provided with cache memories in addition to the cores and the main memory described above. By transferring data frequently referred to by a task executed in a core from a main memory to a cache memory in advance, the speed at which the task refers to the data may be increased.

However, since data referred to by the previous task is not necessarily referred to by the next task, a cache memory may not be reused at the timing of switching of the tasks, resulting in degradation of the execution speed of the task.

The related art is described in Japanese Laid-open Patent Publication No. 2009-104422, Japanese Laid-open Patent Publication No. 2006-260096, and Japanese Laid-open Patent Publication No. 2019-49843.

The related art is also described in Lee J., Tsugane K., Murai H., Sato M., "OpenMP Extension for Explicit Task Allocation on NUMA Architecture", Open MP: Memory, Devices, and Tasks, 2016, Springer International Publishing, pages 89-101.

### SUMMARY

### [TECHNICAL PROBLEM]

It is desirable to increase the execution speed of tasks.

### [SOLUTION TO PROBLEM]

According to an embodiment of one aspect of the invention, an information processing apparatus includes a plurality of cores that perform a plurality of respective tasks in parallel; and a plurality of cache memories that are provided corresponding to each of the plurality of cores and that store data to be referred to by the corresponding task at the time of execution, and wherein at least one of the plurality of cores is configured to: specify, for each of the cores, an overlap between the data referred to by the task that has been executed at the time of execution and data to be referred to by the task that is not yet executed at the time of execution, and executes the task that is not yet executed in a core having the largest overlap among the plurality of cores.

### [ADVANTAGEOUS EFFECTS OF INVENTION]

According to an embodiment, the execution speed of tasks may be increased.

### BRIEF DESCRIPTION OF DRAWINGS

The invention is described, by way of example only, with reference to the following drawings, in which:
FIG. 1 is a hardware configuration diagram of a parallel computer used in the examination;
FIG. 2 is a diagram schematically illustrating a method of generating an execution program executed by the parallel computer used in the examination;
FIG. 3 is a diagram schematically illustrating operations of task registration I/Fs and task execution I/F in the execution program executed by the parallel computer used in the examination;
FIG. 4 is a hardware configuration diagram of an information processing apparatus according to a first embodiment;
FIG. 5 is a diagram schematically illustrating a method of generating an execution program executed by the information processing apparatus according to the first embodiment;
FIG. 6 is a diagram illustrating a format of the numa_val clause in the first embodiment;
FIG. 7 is a diagram illustrating variable reference information in the first embodiment;
FIG. 8 is a functional configuration diagram of the information processing apparatus according to the first embodiment;
FIG. 9 is a diagram schematically illustrating an operation of a task registration unit according to the first embodiment;
FIG. 10 is a diagram schematically illustrating an operation of a task execution processing unit according to the first embodiment;
FIG. 11 is a flowchart illustrating the overall flow of a calculation method according to the first embodiment;
FIG. 12 is a flowchart illustrating the execution processing of a task registration I/F in step S2 in FIG. 11;
FIG. 13 is a flowchart illustrating the execution processing of the task execution I/F in step S3 in FIG. 11;
FIG. 14 is a flowchart illustrating identification processing performed in step S22 in FIG. 13;
FIG. 15 is a schematic diagram for describing the meanings of respective parameters S, E, and W used in the first embodiment;
FIG. 16 is a diagram illustrating an example of a source program used in the first embodiment;
FIG. 17 is a diagram illustrating the execution program obtained by a compiler compiling the source program in the first embodiment;
FIG. 18 is a diagram illustrating an actual format of the variable reference information of the task registration I/F (TASK-A, vx[0:50]) in the first embodiment;
FIG. 19 is a diagram schematically illustrating the contents of a task pool and a cache status table when the execution program is executed halfway in the first embodiment;
FIG. 20 is a schematic diagram illustrating a method of calculating an overlap between pieces of variable reference information in the first embodiment;
FIG. 21 is a diagram schematically illustrating the contents of the task pool and the cache status table after execution of a task TASK-E in the first embodiment;
FIG. 22 is a diagram schematically illustrating the contents of the task pool and the cache status table after execution of a task TASK-F in the first embodiment; and
FIG. 23 is a flowchart illustrating the execution processing of the task execution I/F in a second embodiment.

### DESCRIPTION OF EMBODIMENTS

Prior to the description of the present embodiments, matters examined by the inventor of the present application will be described.

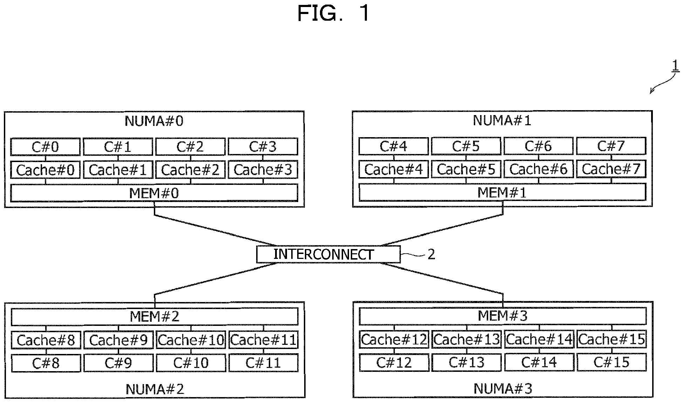

FIG. 1 is a hardware configuration diagram of a parallel computer used in the examination.

A parallel computer 1 is a computer employing NUMA as an architecture, and has a structure in which a plurality of NUMA nodes identified as NUMA#0 to NUMA#3 are coupled by an interconnect 2. The NUMA#0 is provided with cores C#0 to C#3, cache memories Cache#0 to Cache#3, and a main memory MEM#0. The NUMA#1 is provided with cores C#4 to C#7, cache memories Cache#4 to Cache#7, and a main memory MEM#1. The NUMA#2 is provided with cores C#8 to C#11, cache memories Cache#8 to Cache#11, and a main memory MEM#2. The NUMA#3 is provided with cores C#12 to C#15, cache memories Cache#12 to Cache#15, and a main memory MEM#3.

Each of the cores C#0 to C#15 is hardware for calculation including an arithmetic and logic unit (ALU), a register file, and the like. In this example, it is assumed that the number of cores provided for each of the NUMA#0 to NUMA#3 is four. Portions which may be executed in parallel to each other in an execution program executed by the parallel computer 1 are referred to as tasks. In the parallel computer 1, a plurality of tasks are executed in parallel in the cores C#0 to C#15, thereby improving the throughput of the execution program composed of the plurality of tasks.

The cache memories Cache#0 to Cache#15 are data cache memories provided corresponding to the respective cores C#0 to C#15. In this example, one core may access only one data cache memory that is in the same NUMA node as that core. For example, the core C#0 may only access the cache memory Cache#0.

The main memories MEM#0 to MEM#3 are dynamic random-access memories (DRAMs), each of which is provided in a corresponding one of the NUMA#0 to NUMA#3. The address spaces of the main memories MEM#0 to MEM#3 do not overlap, and each task is executed with reference to data in any of the main memories MEM#0 to MEM#3.

For a certain core, the main memory present in the same NUMA node is referred to as a local memory, while main memories present in different nodes are referred to as remote memories. Access to a local memory is referred to as local access, and access to a remote memory is referred to as remote access. Remote access takes more time than local access, because access has to be made to another NUMA node via the interconnect 2 in remote access.

Therefore, in this example, tasks are allocated to threads of the individual cores in order to avoid the occurrence of remote access as much as possible in a manner described below.

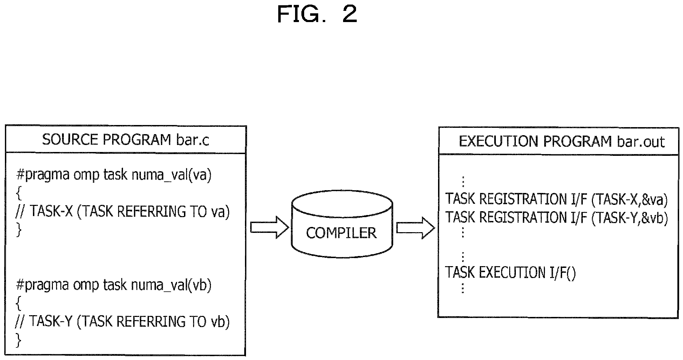

FIG. 2 is a diagram schematically illustrating a method of generating an execution program executed by the parallel computer 1.

In the example of FIG. 2, an execution program bar.out executable by the parallel computer 1 is generated by a compiler compiling a source program bar.c.

The source program bar.c is a source file written in the C language. In the source file, portions which may be executed in parallel are explicitly specified as tasks by a programmer. The task construct of OpenMP is used for the specification. A task construct is a construct that specifies, as a task, processing of the content of {} that follows the directive #pragma omp task numa_val(). "numa_val()" in this directive is a clause for directing a variable to be referred to by a task, and is hereinafter referred to as a numa_val clause.

In FIG. 2, a variable va referred to by a task TASK-X is specified by #pragma omp task numa_val(va){//TASK-X (a task referring to va)}.

The compiler cuts out individual tasks from the source program bar.c, and inserts task registration I/Fs corresponding to the respective tasks into the execution program bar.out. A task registration I/F is a program for registering each task in a task pool (described later), and is generated for each of a plurality of tasks. TASK-X and TASK-Y, which are arguments, are function pointers each indicating the head address of the processing of the corresponding task. &va and &vb are addresses of the variables va and vb, respectively.

The compiler inserts one task execution I/F into the execution program bar.out. A task execution I/F is a program that executes a plurality of tasks by calling a runtime routine as will be described later.

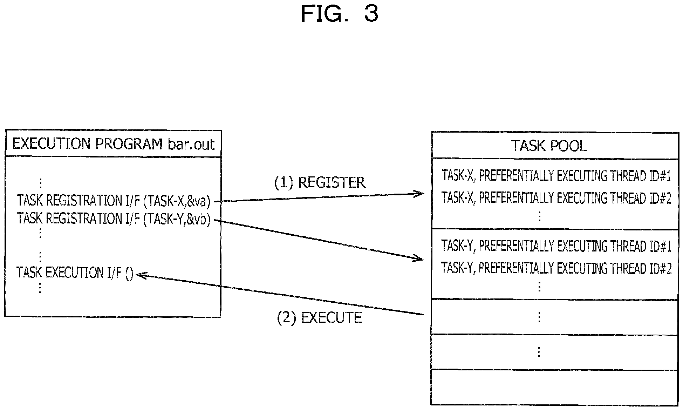

FIG. 3 is a diagram schematically illustrating operations of task registration I/Fs and task execution I/F.

As illustrated in FIG. 3, when a task registration I/F (TASK-X, &va) is executed, the function pointer TASK-X and preferentially executing threads ID#1, ID#2, ... are registered in a task pool (1). ID#1 and ID#2 are identifiers for identifying respective threads that preferentially execute a task specified by the function pointer TASK-X, and the smaller the value, the higher the priority.

In this example, the task registration I/F passes &va as an argument to the system call get_mempolicy to identify the main memory in which the address &va is located among the main memories MEM#0 to MEM#3. The task registration I/F registers, as preferentially executing threads, the threads of the core of the NUMA node to which the identified main memory belongs, in association with the TASK-X.

Similarly, by executing a task registration I/F (TASK-Y, &vb), threads of the core of the node where the address &vb is located are registered as preferentially executing threads of the TASK-Y.

Next, the task execution I/F executes the tasks registered in the task pool (2). At this time, threads ID#1, ID#2, ... are sequentially allocated to the core in order from the thread having the smallest value.

According to the parallel computer 1 described above, by using the address &va of the variable va specified in the numa_val clause, a node in which the address &va is located is identified among the NUMA#0 to NUMA#3. A task that refers to the variable va is executed in the threads of the core in the node. Therefore, it is considered that it is possible to reduce the possibility that remote access occurs at the time of executing a task, and to improve the execution speed of a program.

However, in this method, when switching of tasks occurs in a certain core, there is a possibility that data to be referred to by the task after switching is not present in the cache memory, and a cache miss may occur. Therefore, cache memories may not fully increase the speed of task execution, and it is difficult to improve the execution speed of tasks.

Described below are the present embodiments capable of improving the execution speed of tasks by suppressing the occurrence of a cache miss.

### (First Embodiment)

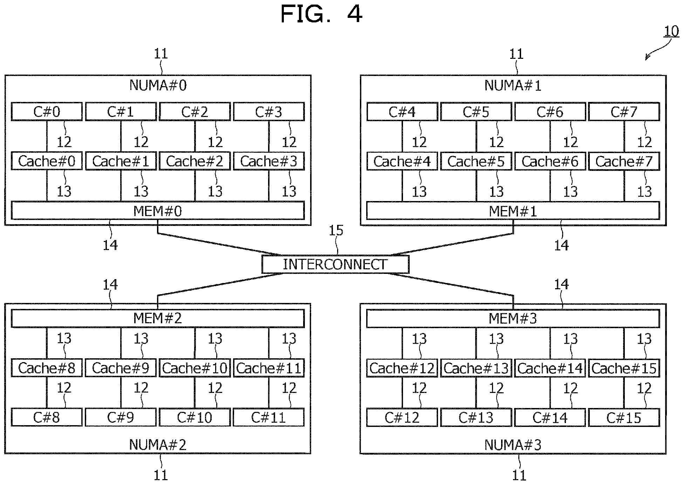

FIG. 4 is a hardware configuration diagram of the information processing apparatus according to a first embodiment.

An information processing apparatus 10 is a parallel computer employing NUMA as an architecture, and includes four NUMA nodes 11 represented by NUMA#0 to NUMA#3. The number following # represents a node ID for identifying each NUMA node 11. For example, the node ID of NUMA#0 is **"0".**

The NUMA nodes 11 are coupled to each other by an interconnect 15 such as a router or a switch.

Each NUMA node 11 includes cores 12, cache memories 13, and a main memory 14. The core 12 is a piece of hardware provided with an ALU for calculation and a register file. A plurality of cores 12 are provided in a single NUMA node 11. In this example, the respective cores 12 are represented by C#0 to C#15. The number following # is a core ID for identifying each core 12. For example, the core ID of C#2 is "2".

A task is allocated to each of the plurality of cores 12, so that a plurality of tasks are executed in parallel by the plurality of cores 12.

The cache memory 13 is a data cache provided corresponding to each core 12, and stores data to be referred to by a task being executed in the core 12. The cache memories 13 are represented by cache #0 to cache #15. The number following # is a cache ID for identifying each cache memory 13. For example, the cache ID of cache #3 is "3".

The main memory 14 is a single DRAM which is provided in each of the NUMA nodes 11. In this example, the respective main memories 14 are represented by MEM#0 to MEM#3. The number following # is a memory ID for identifying each main memory 14. For example, the memory ID of MEM#1 is "1".

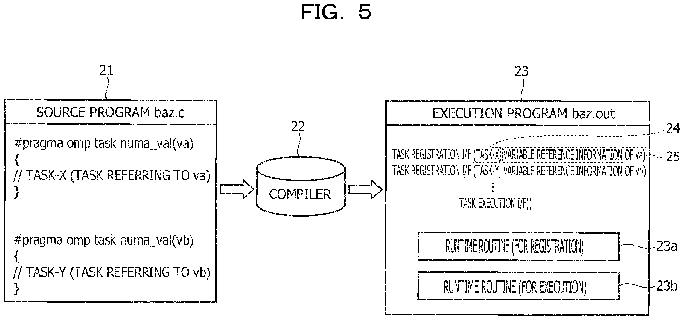

FIG. 5 is a diagram schematically illustrating a method of generating an execution program executed by the information processing apparatus 10.

In order to generate an execution program, a programmer first writes a source program 21. The source program 21 is written in the C language, and the name of the program is baz.c. The source program 21 may also be written in Fortran or C++.

In the source program 21, portions which may be executed in parallel are explicitly specified by the programmer as tasks in accordance with the task construct of OpenMP. In the example of FIG. 5, two tasks are specified by the two directives #pragma omp task numa_val().

The numa_val clause described above is used in this directive.

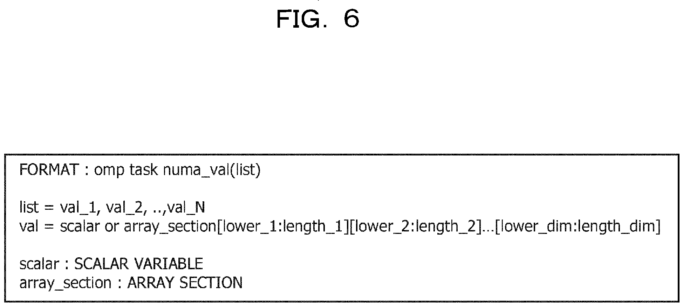

FIG. 6 is a diagram illustrating the format of the numa_val clause.

As illustrated in FIG. 6, "list" is specified as an argument in the numa_val clause. "list" is a list (val_1, val_2, ..., val_N) consisting of a plurality of scalar variables (scalar) or a plurality of array sections (array_section).

An index of each array section is specified by [lower:length], using the starting index "lower" and the length of array "length". For example, an array section a[lower:length] of an array a[] is an array having a[lower], a[lower + 1], ..., a[lower + length - 1] as elements. According to this example, an array section a[10:5] is an array having a[10], a[11], a[12], a[13], and a[14] as elements.

A multidimensional array section may be specified by the numa_val clause. In that case, an array section may be specified by array_section[lower_1:length_1][lower_2:length_2]...[lower_dim:length_dim], using the number of dimensions "dim" of the array.

Reference is again made to FIG. 5.

In the source program 21, the variable va is specified in the numa_val clause by the first directive #pragma omp task numa_val(va). Although the variable va is a scalar variable, an array section may be specified by the numa_val clause in accordance with the format illustrated in FIG. 6.

Next, a compiler 22 compiles the source program 21 to generate an execution program 23. The execution program 23 is an example of a calculation program, and is a binary file that may be executed by the information processing apparatus 10. In this example, the name of the execution program 23 is baz.out.

During compilation, the compiler 22 finds a task construct from the source program 21, and inserts the task registration I/Fs corresponding to respective tasks into the execution program 23. At the same time, the compiler 22 inserts a task execution I/F, a runtime routine 23a for registration, and a runtime routine 23b for execution into the execution program 23.

Arguments of a task registration I/F are a function pointer 24 and variable reference information 25. Among these, the function pointer 24 is a pointer indicating the head address of each task. When a task registration I/F is executed, these arguments are passed to the runtime routine 23a.

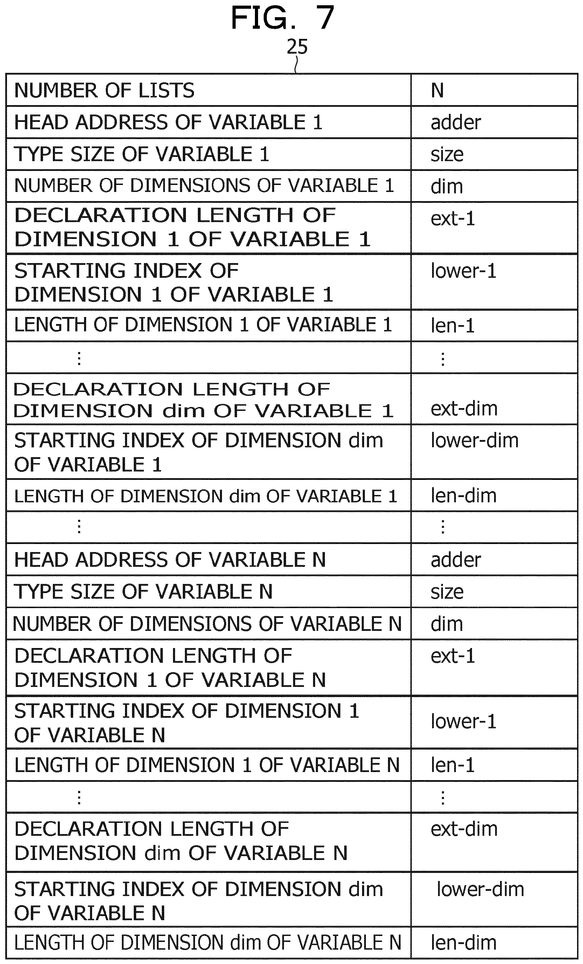

FIG. 7 is a diagram illustrating the variable reference information 25.

The variable reference information 25 is information for specifying data to be referred to by an unexecuted task at the time of execution. In this example, the variable reference information 25 is a structure generated by the compiler 22 based on the argument of the numa_val clause of the source program 21. Members of the structure are the number N of lists consisting of variables 1 to N specified in the numa_val clause, head addresses "adder" of the variables 1 to N, type sizes "size" of the variables 1 to N, and the number of dimensions "dim" of the array section.

Also included in the structure are a declaration length, a starting index, and a length of the array section in each number of dimensions "dim". For example, in an array section in which the number of dimensions "dim" is 1, the declaration length "ext - 1", the starting index "lower - 1", and the length "len - 1" are included in the structure.

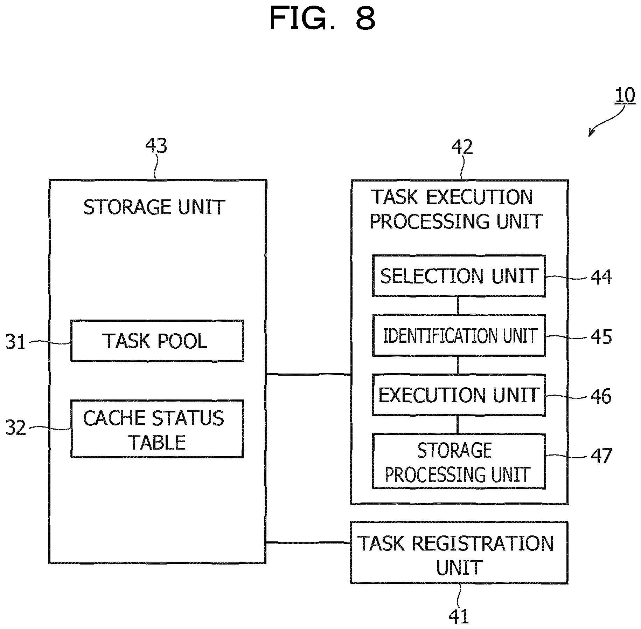

FIG. 8 is a functional configuration diagram of the information processing apparatus 10 according to the present embodiment.

As illustrated in FIG. 8, the information processing apparatus 10 includes a task registration unit 41, a task execution processing unit 42, and a storage unit 43. Each of these units is realized by the plurality of cores 12 and the plurality of main memories 14 in the plurality of NUMA nodes 11 executing the execution program 23 described above in cooperation with each other. The function of each unit may be realized by one core 12 and one main memory 14 in one NUMA node 11 executing the execution program 23.

Among these, the task registration unit 41 executes the task registration I/F described above.

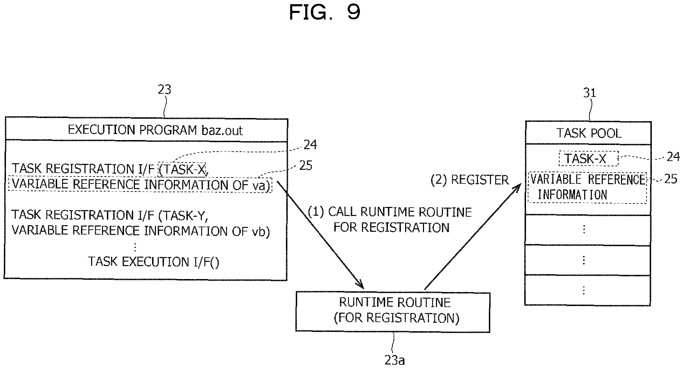

FIG. 9 is a diagram schematically illustrating an operation of the task registration unit 41.

When the execution program 23 is executed to reach the start address of a task registration I/F, the task registration I/F is executed. The task registration I/F calls the runtime routine 23a for registration, and passes the function pointer 24 and the variable reference information 25 to the runtime routine 23a (1).

Next, the runtime routine 23a registers the function pointer 24 and the variable reference information 25 in a task pool 31 in association with each other (2). The task pool 31 is an example of task information, and is information in which the function pointer 24 of an unexecuted task is associated with the variable reference information 25 that is to be referred to when the task is executed. Information to be associated with the variable reference information 25 in the task pool 31 is not limited to the function pointer 24 as long as the information allows for identification of a task. For example, a task name may be adopted instead of the function pointer 24.

As illustrated in FIG. 7, the variable reference information 25 in the task pool 31 includes a type size, the number of dimensions, and other information of a variable included in a task. A variable is the name of data to be referred to by a task at the time of execution. Thus, by using this variable reference information 25, it is possible to identify the data to be referred to by the task at the time of execution.

When a task in the task pool 31 has been executed, the function pointer 24 and the variable reference information 25 of the task are deleted from the task pool 31. When there is no unexecuted task, the task pool 31 is empty.

Reference is again made to FIG. 8.

The task execution processing unit 42 is a functional block that executes a task execution I/F, and includes a selection unit 44, an identification unit 45, an execution unit 46, and a storage processing unit 47.

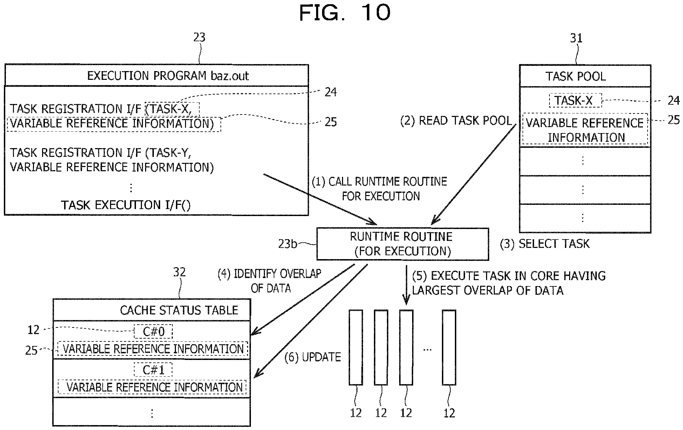

FIG. 10 is a diagram schematically illustrating an operation of the task execution processing unit 42.

When execution of all task registration I/Fs in the execution program 23 is completed, a task execution I/F is executed. The task execution I/F calls the runtime routine 23b for execution (1). By executing the runtime routine 23b for execution, each of the selection unit 44, the identification unit 45, the execution unit 46, and the storage processing unit 47 described above are realized.

Next, the runtime routine 23b reads the task pool 31 (2).

Next, the selection unit 44 selects one unexecuted task from the task pool 31 (3).

The identification unit 45 identifies, for each of the plurality of cores 12, an overlap between data referred to by the task executed in the core 12 at the time of execution, and data to be referred to by the task selected by the selection unit 44 at the time of execution (4).

An overlap between respective pieces of data indicates the size of the area where the respective pieces of data overlap in the memory space. In order to identify the size, the identification unit 45 refers to a cache status table 32.

The cache status table 32 is a table in which the core 12 and the variable reference information 25 are associated with each other. When a task is executed in the core 12, the variable reference information 25 corresponding to the task in the task pool 31 is stored in the cache status table 32 in association with the core 12 in which the task has been executed.

The identification unit 45 reads the variable reference information 25 of the task selected by the selection unit 44 from the task pool 31, and compares the variable reference information 25 with a plurality of pieces of variable reference information 25 in the cache status table 32 for each core 12. As a result, the identification unit 45 may identify the overlap between data referred to by the task executed in each core 12 at the time of execution, and data to be referred to by the task selected by the selection unit 44 at the time of execution.

Next, the identification unit 45 identifies the core 12 having the largest overlap of data, and the execution unit 46 executes the unexecuted task in the core 12 (5).

The data referred to by the task at the time of execution is highly likely to remain in the cache memory 13 corresponding to the core 12 in which the task has been executed. Therefore, if the unexecuted task is executed in the core 12 having the largest overlap of data to be referred to by the task, the cache hit rate increases and the execution speed of the task may be improved.

When the execution of the task is completed, the storage processing unit 47 updates the cache status table 32 (6). The target of update is the variable reference information 25 corresponding to the core 12 in which the task has been executed. As an example, the storage processing unit 47 stores, in association with each other in the cache status table 32, the core 12 in which the task has been executed and the variable reference information 25 corresponding to the task in the task pool 31.

Reference is again made to FIG. 8.

The storage unit 43 is a functional block realized by any one of the plurality of main memories 14, and stores the above-described task pool 31 and the cache status table 32. The task pool 31 may be stored in one of the main memories 14, and the cache status table 32 may be stored in one of the main memories 14 different from this main memory 14.

Next, a calculation method according to the present embodiment will be described.

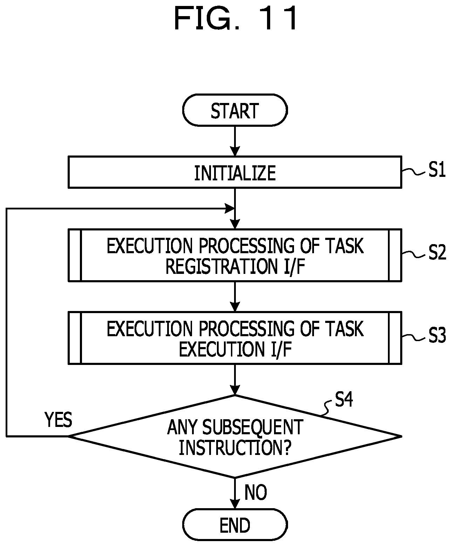

FIG. 11 is a flowchart illustrating the overall flow of the calculation method according to the present embodiment. This calculation method is performed as follows by executing the execution program 23.

First, in step S1, an initialization routine of the execution program 23 empties the cache status table 32.

Next, the process proceeds to step S2, in which execution processing of a plurality of task registration I/Fs is performed. In this processing, each task registration I/F calls the runtime routine 23a for registration, and passes the function pointer 24 and the variable reference information 25 to the runtime routine 23a. The runtime routine 23a registers the function pointer 24 and the variable reference information 25 in the task pool 31.

Next, the process proceeds to step S3, in which execution processing of a task execution I/F is performed. Thus, a certain task is executed in the core 12 having the largest overlap of the data to be referred to by that task.

Next, the process proceeds to step S4, in which the execution program 23 determines whether or not there is a subsequent instruction. If YES is determined, the process returns to step S2. On the other hand, if NO is determined, the process is terminated.

Next, processing performed by a task registration I/F will be described.

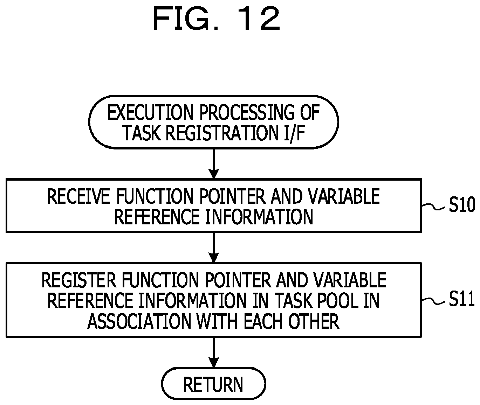

FIG. 12 is a flowchart illustrating the execution processing of a task registration I/F performed in step S2 in FIG. 11.

First, in step S10, the task registration unit 41 receives the function pointer 24 and the variable reference information 25 from the task registration I/F.

Next, the process proceeds to step S11, in which the task registration unit 41 registers the function pointer 24 and the variable reference information 25 in the task pool 31 in association with each other. The variable reference information 25 is information for identifying data to be referred to by an unexecuted task at the time of execution. Thus, the identification unit 45 may identify, based on the task pool 31, the data to be referred to by the unexecuted task at the time of execution.

After that, the process returns to the calling source.

Next, processing performed by a task execution I/F will be described.

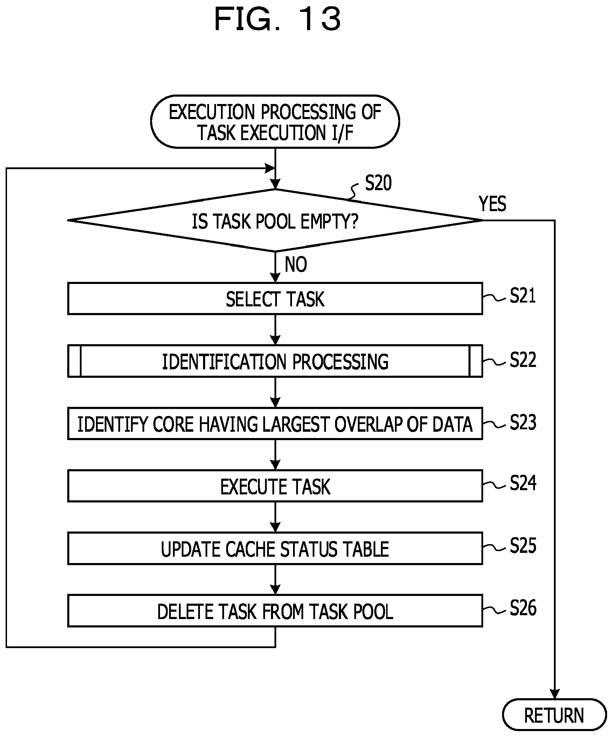

FIG. 13 is a flowchart illustrating the execution processing of a task execution I/F performed in step S3 in FIG. 11.

First, in step S20, the runtime routine 23b for execution reads the task pool 31 to determine whether the task pool 31 is empty.

If YES is determined, the process returns to the calling source without doing anything since there is no task to be executed. On the other hand, if NO is determined, the process proceeds to step S21.

In step S21, the selection unit 44 selects one unexecuted task from the task pool 31.

Next, the process proceeds to step S22, in which the identification unit 45 performs processing for identifying an overlap of data. In the identification processing, an overlap between data referred to by the task executed in each core 12 at the time of execution, and data to be referred to by the task selected in step S21 at the time of execution is identified for each of the plurality of cores 12. For example, the identification unit 45 identifies the overlap of data by using the variable reference information 25 in the cache status table 32 and the variable reference information 25 in the task pool 31. The overlap of data is identified for all the cores 12 in all the NUMA nodes 11.

Next, the process proceeds to step S23, in which the identification unit 45 identifies the core 12 having the largest overlap of data among all the cores 12 in all the NUMA nodes 11.

Next, the process proceeds to step S24, in which the execution unit 46 executes the unexecuted task in the core 12.

The process proceeds to step S25, in which the storage processing unit 47 updates the cache status table 32. Thus, the variable reference information 25 of the core 12 in which the task has been executed in the cache status table 32 is updated to the variable reference information 25 corresponding to the task in the task pool 31. As a result, when executing a subsequent task, the identification unit 45 may identify an overlap of data for each core 12 by using the variable reference information 25 in the task pool 31 and the variable reference information 25 in the cache status table 32.

Next, the process proceeds to step S26, in which the storage processing unit 47 deletes, from the task pool 31, the task of which execution has been completed. Thus, only unexecuted tasks remain in the task pool 31, so the identification unit 45 may identify unexecuted tasks with reference to the task pool 31.

After that, the process returns to step S20.

After having completed the above, the processing of the task execution I/F is terminated.

According to the processing of the task execution I/F described above, in step S23, an overlap between data referred to by the task executed in each core 12 at the time of execution, and data to be referred to by the unexecuted task at the time of execution is identified for each core 12. In step S24, the task is executed in the core 12 having the largest overlap of data.

The data referred to by the executed task at the time of execution is highly likely to remain in the cache memory 13 of the core 12 in which the task has been executed. Therefore, if an unexecuted task is executed in the core 12 having the largest overlap between data of the executed task and data of the unexecuted task, the cache hit rate increases when the unexecuted task is executed. As a result, the cache memory 13 may be reused, and the execution speed of the task may be increased.

Next, the identification processing in step S22 in FIG. 13 will be described in detail.

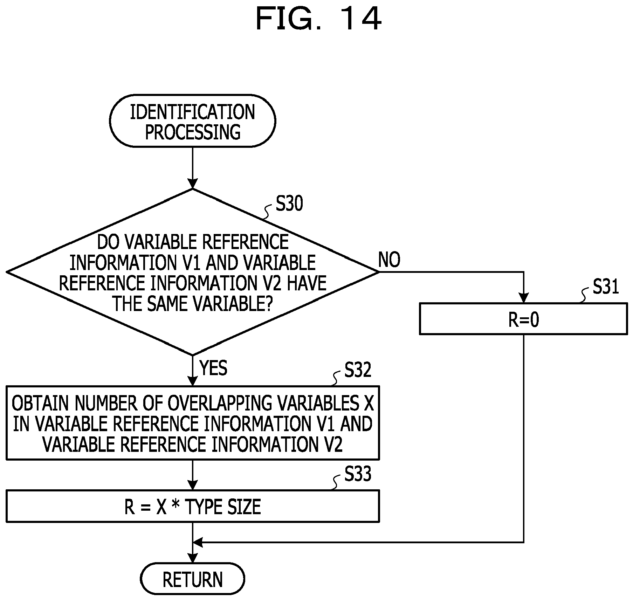

FIG. 14 is a flowchart illustrating the identification processing performed in step S22 in FIG. 13.

This identification processing is processing for identifying the size R (number of bytes) of the area where respective pieces of data included in the two pieces of variable reference information 25 overlap in the memory space. In the following description, two pieces of the variable reference information 25 to be processed are represented by V1 and V2. For example, the variable reference information 25 in the task pool 31 is V1, and the variable reference information 25 in the cache status table 32 is V2.

First, in step S30, the identification unit 45 determines whether the variable reference information V1 and the variable reference information V2 contain the same variable. If NO is determined, there is no such data as overlapping in the memory space in the variable reference information V1 and the variable reference information V2. Therefore, in this case, the process proceeds to step S31, in which the identification unit 45 sets R = 0. The process then returns to the calling source.

On the other hand, if YES is determined in step S30, the process proceeds to step S32.

In step S32, the identification unit 45 obtains the number of overlapping variables X in each of the variable reference information V1 and the variable reference information V2.

For example, a case in which both of the variable reference information V1 and the variable reference information V2 include a multidimensional array section array_section[lower_1:length_1][lower_2:length_2]...[lower_dim:length_dim] having the number of dimension "dim" is considered. In this case, among a plurality of elements of the array section [lower_k:length_k], the number of overlapping elements W in the variable reference information V1 and the variable reference information V2 is calculated. The number of elements W is calculated for all dimensions k (k = 1, 2, ...dim) in accordance with the following equations (1) to (3).$S = max \left(lower_k of V1, lower_k of V2\right)$ (1) $E = min \left(\left(lower_k+length_k-1\right) of V1, \left(lower_k+length_k-1\right) of V2\right)$ (2) $W = E - S + 1$ (3)

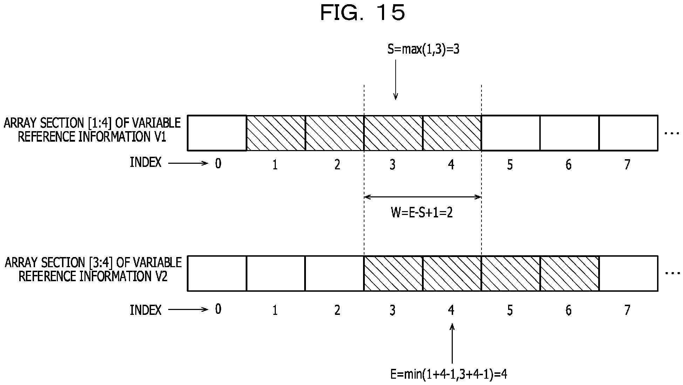

FIG. 15 is a schematic diagram for describing the meanings of the individual parameters S, E, and W.

FIG. 15 illustrates an example of an array section whose number of dimensions is k in the array_section. As an example, a description is given of a case in which an array section [1:4] of array_section is included in the variable reference information V1, and an array section [3:4] of array_section is included in the variable reference information V2. Array elements used in the variable reference information V1 and the variable reference information V2 are hatched, while unused array elements are outlined.

As illustrated in FIG. 15, the parameter S is the smallest index among the indexes of the array elements used in both of the variable reference information V1 and the variable reference information V2. The parameter E is the largest index among the indexes of the array elements used in both of the variable reference information V1 and the variable reference information V2. The number of elements W is the number of array elements used in both of the variable reference information V1 and the variable reference information V2.

In step S32, the number of elements W is calculated for every dimension k (k = 1, 2, ...dim), and the product of all of the numbers of elements W is set as the number of overlapping variables X in the variable reference information V1 and the variable reference information V2.

Next, the process proceeds to step S33, in which by multiplying the number X by the type size of the array element, the size R of the area where data in the variable reference information V1 and data in the variable reference information V2 overlap is obtained. After that, the process returns to the calling source.

The basic steps of this identification processing are completed as described above.

Next, the present embodiment will be described in more detail with reference to a specific example.

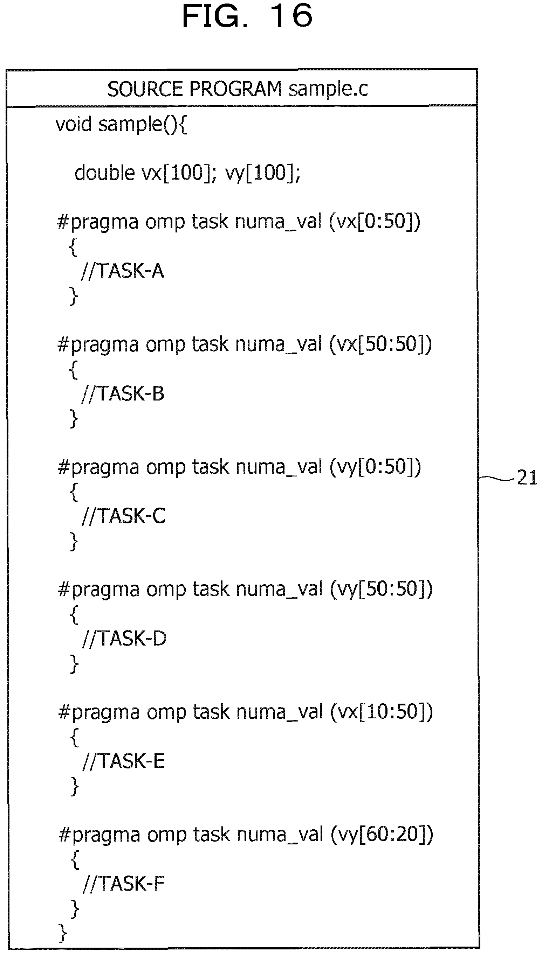

FIG. 16 is a diagram illustrating an example of the source program 21 used in the following description.

The source program 21 is a program written in the C language in which six tasks (TASK-A, TASK-B, TASK-C, TASK-D, TASK-E, and TASK-F) are described by the task construct of OpenMP. For each task, a variable used in the task is specified by the numa_val clause. The name of the source program 21 is "sample.c".

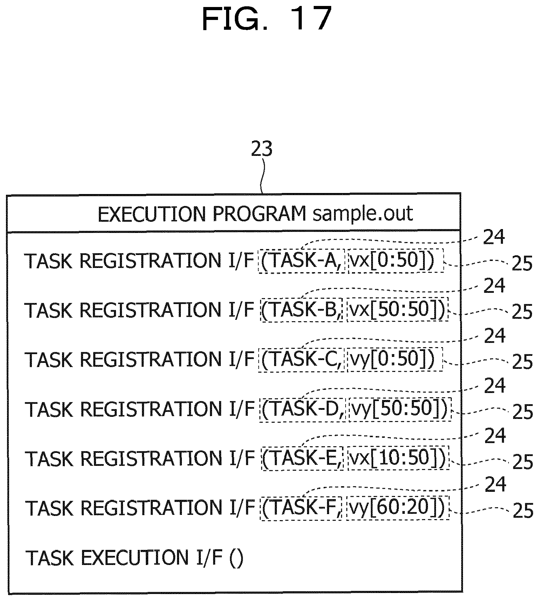

FIG. 17 is a diagram illustrating the execution program 23 obtained by the compiler 22 compiling the source program 21.

As illustrated in FIG. 17, task registration I/Fs corresponding to the respective tasks TASK-A, TASK-B, TASK-C, TASK-D, TASK-E, and TASK-F are inserted into the execution program 23. As described above, the function pointer 24 and the variable reference information 25 of each task are provided as arguments of a corresponding one of these task registration I/Fs.

Although the variable reference information 25 is a structure as described above, in FIG. 17, an argument of the numa_val clause (see FIG. 16) is used as the variable reference information 25 for ease of understanding.

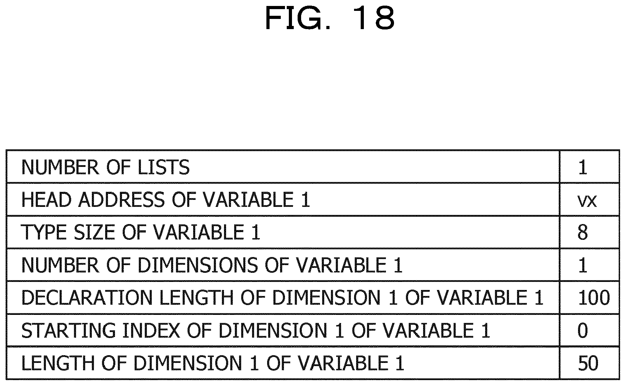

FIG. 18 is a diagram illustrating an actual format of the variable reference information 25 in the task registration I/F (TASK-A, vx[0:50]).

Since the "variable 1" referred to by the task TASK-A only has a one-dimensional array section vx[0:50], the number of lists is "1". The starting index "0" and the length "50" of vx[0:50] are also stored in the variable reference information 25. Since the head address of the array is represented by the name of the array, "vx" is stored in the head address of the variable 1. In this case, the type size of each element of the array is "8 (bytes)". Since the array section vx[0:50] is a one-dimensional array, the number of dimensions is "1".

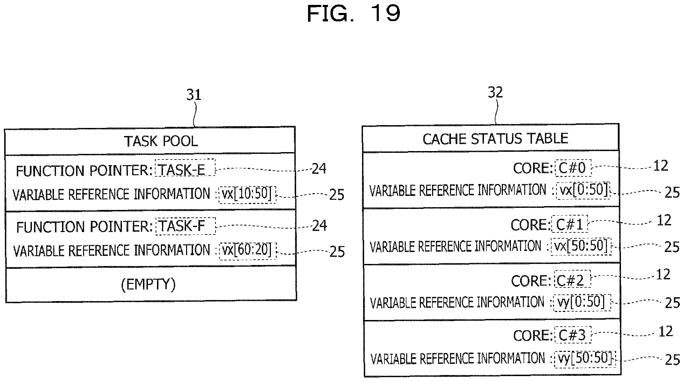

FIG. 19 is a diagram schematically illustrating contents of the task pool 31 and the cache status table 32 when the execution program 23 is executed halfway.

In FIG. 19, a case is assumed in which, after all of the six tasks are registered in the task pool 31, the first four tasks in the task pool 31 have already been executed in the cores 12 (C#0 to C#3) by a task execution I/F. It is also assumed that the cores 12 (C#0 to C#3) are empty, and that the following two tasks TASK-E and TASK-F are waiting for execution.

At this point in time, only two tasks (TASK-E and TASK-F) are registered in the task pool 31. In the cache status table 32, stored are pieces of the variable reference information 25 of the respective tasks, which have just been executed in the respective cores 12 (C#0 to C#3).

In this state, a case in which the selection unit 44 selects the task TASK-E at the top of the task pool 31 in step S21 (see FIG. 13) is considered. In this case, when the size R of the area where the variable reference information 25 of each core 12 and the variable reference information 25 of the task TASK-E overlap is identified in step S33 (FIG. 14), the following results are obtained.

Overlap between the variable reference information 25 of the core C#0 and the variable reference information 25 of the task TASK-E: vx[10:40] (40 elements, R = 320 bytes)

Overlap between the variable reference information 25 of the core C#1 and the variable reference information 25 of the task TASK-E: vx[50:10] (10 elements, R = 80 bytes)

Overlap between the variable reference information 25 of the core C#2 and the variable reference information 25 of the task TASK-E: No (R = 0 byte)

Overlap between the variable reference information 25 of the core C#3 and the variable reference information 25 of the task TASK-E: No (R = 0 byte)

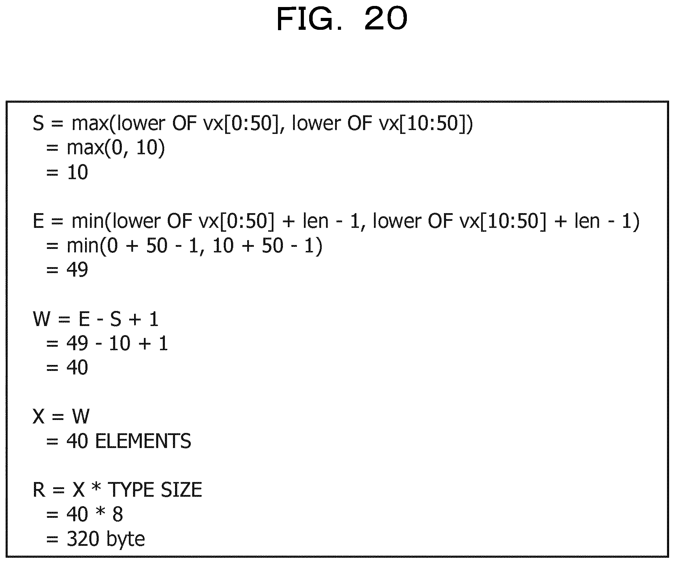

FIG. 20 is a schematic diagram illustrating a method of calculating the overlap between the variable reference information 25 of the core C#0 and the variable reference information 25 of the task TASK-E among the above overlaps. The overlap may be calculated by calculating the parameters S, E, W, X, and R in accordance with the aforementioned equations (1) to (3).

In this example, among the four cores 12 (C#0 to C#3), the core C#0 has the largest overlap. Therefore, in step S23 (see FIG. 13), the identification unit 45 identifies the core C#0 as the core 12 having the largest overlap of data. In step S24 (see FIG. 13), the execution unit 46 executes the task TASK-E in the core C#0.

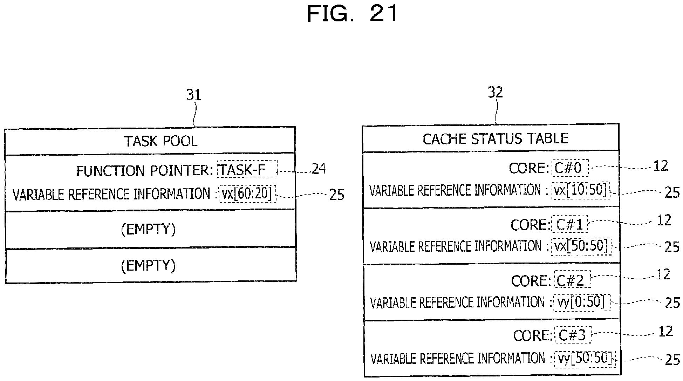

FIG. 21 is a diagram schematically illustrating the contents of the task pool 31 and the cache status table 32 after the task TASK-E is executed as described above.

When execution of the task TASK-E is completed, in step S26 (see FIG. 13), the storage processing unit 47 deletes, from the task pool 31, the function pointer 24 and the variable reference information 25 of the task TASK-E. Therefore, only the function pointer 24 and the variable reference information 25 of the task TASK-F remain in the task pool 31.

In the cache status table 32, the variable reference information 25 corresponding to the core C#0 is updated to the variable reference information 25 of the task executed in the core C#0. This update operation is performed by the storage processing unit 47 in step S25 as described above.

Next, in step S21 (see FIG. 13), the selection unit 44 selects the task TASK-F remaining in the task pool 31.

In step S33 (see FIG. 14), the identification unit 45 identifies the size R of the area where the variable reference information 25 of each core 12 and the variable reference information 25 of the task TASK-F overlap. The results of identification are as follows.

Overlap between the variable reference information 25 of the core C#0 and the variable reference information 25 of the task TASK-F: No (R = 0 byte)

Overlap between the variable reference information 25 of the core C#1 and the variable reference information 25 of the task TASK-F: No (R = 0 byte)

Overlap between the variable reference information 25 of the core C#2 and the variable reference information 25 of the task TASK-F: No (R = 0 byte)

Overlap between the variable reference information 25 of the core C#3 and the variable reference information 25 of the task TASK-F: vy[60:20] (20 elements, R = 160 bytes)

In this example, among the four cores 12 (C#0 to C#3), the core C#3 has the largest overlap. Therefore, in step S23 (see FIG. 13), the identification unit 45 identifies the core C#3 as the core 12 having the largest overlap of data. In step S24, the execution unit 46 executes the task TASK-F in the core C#3.

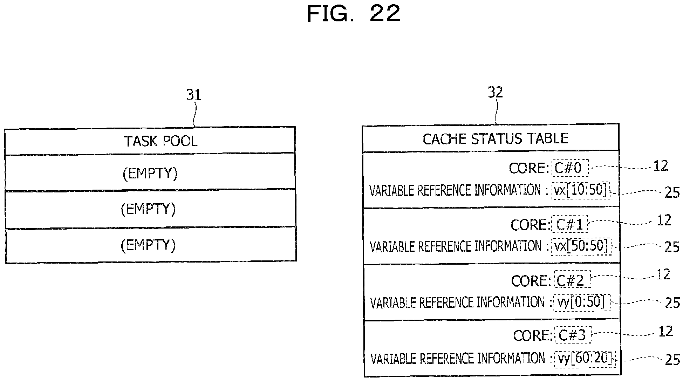

FIG. 22 is a diagram schematically illustrating the contents of the task pool 31 and the cache status table 32 after execution of the task TASK-F.

When execution of the task TASK-F is completed, the storage processing unit 47 updates the cache status table 32 in step S25 (see FIG. 13). Thus, in the cache status table 32, the variable reference information 25 corresponding to the core C#3 is updated to the variable reference information 25 of the task executed in the core C#3.

In step S26 (see FIG. 13), the storage processing unit 47 deletes the task TASK-F from the task pool 31, and the task pool 31 becomes empty.

After having completed the above, the execution of the execution program 23 is terminated.

According to the present embodiment described above, the identification unit 45 identifies the core 12 having the largest overlap between data of the executed task and that of the unexecuted task, and the execution unit 46 executes the unexecuted task in the core 12. Thus, the cache hit rate at the time of executing the unexecuted task is increased, and the execution speed of the task may be increased.

Moreover, since the variable used by the task is specified in the numa_val clause of the source program 21, the variable reference information 25 of the task is included in the execution program 23, thereby enabling the identification unit 45 to easily identify the variable reference information 25 of the task.

### (Second Embodiment)

In the first embodiment, as described with reference to FIG. 13, the selection unit 44 selects only one unexecuted task (step S21), and the task is executed in the core 12 having the largest overlap of data with the task (step S24).

In contrast, in the present embodiment, the number of tasks for which overlap of data with each core 12 is compared is set to be plural.

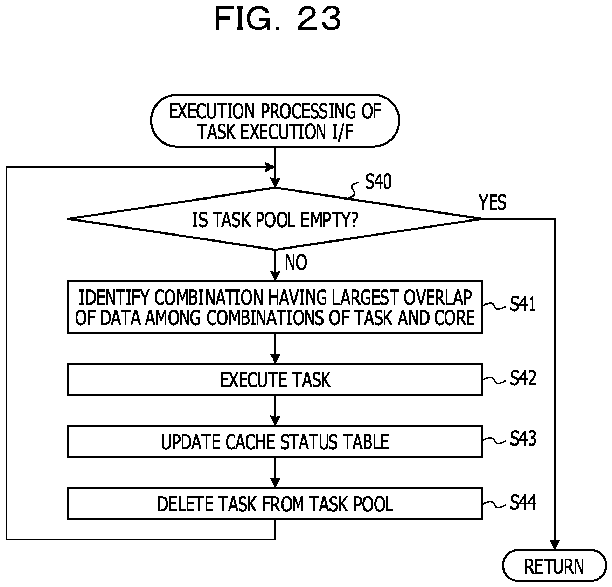

FIG. 23 is a flowchart illustrating the execution processing of the task execution I/F performed in step S3 (see FIG. 11) in the present embodiment.

First, in step S40, the runtime routine 23b for execution reads the task pool 31 to determine whether the task pool 31 is empty.

If YES is determined, the process returns to the calling source without doing anything. On the other hand, if NO is determined, the process proceeds to step S41.

In step S41, the identification unit 45 identifies an overlap between data to be referred to by an unexecuted task at the time of execution, and data referred to by the task executed in the core 12 at the time of execution. In the present embodiment, overlap of data is identified for combinations of all unexecuted tasks in the task pool 31 and all the cores 12 in the cache status table 32, and the combination with the largest overlap is identified by the identification unit 45.

Next, the process proceeds to step S42, in which the execution unit 46 executes the task in the combination thus identified, in the core 12 in the identified combination.

The process proceeds to step S43, in which the storage processing unit 47 updates the cache status table 32. As a result, as in the first embodiment, the variable reference information 25 of the core 12 in which the task is executed in the cache status table 32 is updated to the variable reference information 25 corresponding to the task in the task pool 31.

Next, the process proceeds to step S44, in which the storage processing unit 47 deletes the task from the task pool 31. After that, the process returns to step S40.

After having completed the above, the processing of the task execution I/F in the present embodiment is terminated.

According to the present embodiment described above, in step S41, among combinations of all unexecuted tasks in the task pool 31 and all the cores 12 in the cache status table 32, the combination with the largest overlap of data is identified. In the core 12 of the combination thus identified, the task in the combination is executed. Thereby, the task may maximally utilize the data remaining in the cache memory 13, and the execution speed of the task may be further improved than that in the first embodiment.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Regarding each of the embodiments described above, the following appendices are further disclosed.
(Appendix 1) An information processing apparatus comprising:
   a plurality of cores that execute a plurality of respective tasks in parallel;
   a plurality of cache memories that are provided corresponding to each of the plurality of cores, and that store data to be referred to by the corresponding task at time of execution;
   an identification unit that identifies, for each of the cores, an overlap between the data referred to by the task that has been executed at the time of execution and data to be referred to by the task that is not yet executed at the time of execution; and
   an execution unit that executes the task that is not yet executed in a core having the largest overlap among the plurality of cores.
(Appendix 2) The information processing apparatus according to appendix 1, wherein the identification unit identifies the data to be referred to by the task that is not yet executed at the time of execution, based on task information in which the task is associated with reference information for identifying the data to be referred to by the task that is not yet executed at the time of execution.
(Appendix 3) The information processing apparatus according to appendix 2, further comprising
   a storage processing unit that stores, in a table, the core in which the task has been executed and the reference information corresponding to the task in the task information in association with each other.
(Appendix 4) The information processing apparatus according to appendix 3, wherein the storage processing unit deletes the task that has been executed from the task information.
(Appendix 5) The information processing apparatus according to appendix 3, wherein the identification unit identifies the overlap for each of the cores by using the reference information in the table and the reference information in the task information.
(Appendix 6) The information processing apparatus according to appendix 2,
   wherein a source program describing the task includes a clause for specifying the data to be used in the task, and
   wherein the data specified in the clause is included, as the reference information, in an execution program obtained by compiling the source program.
(Appendix 7) The information processing apparatus according to appendix 1,
   wherein the identification unit identifies a combination in which the overlap becomes largest among combinations of the plurality of tasks that are not yet executed and the plurality of cores, and
   wherein the execution unit executes the task in the identified combination in the core in the identified combination.
(Appendix 8) A computer-readable recording medium having stored therein a calculation program for causing a computer to execute a process, the computer including a plurality of cores that execute a plurality of respective tasks in parallel, and a plurality of cache memories that are provided corresponding to each of the plurality of cores, and that store data to be referred to by the corresponding task at time of execution, the process comprising:
   identifying, for each of the cores, an overlap between the data referred to by the task that has been executed at the time of execution and data to be referred to by the task that is not yet executed at the time of execution; and
   executing the task that is not yet executed in a core having the largest overlap among the plurality of cores.
   the speaker direction determination device 10A includes a central processing unit (CPU) 51, a primary storage unit 52, a secondary storage unit 53, an external interface 54, the first microphone M01, and the second microphone M02. The CPU 51 is an example of a processor that is hardware. The CPU 51, the primary storage unit 52, the secondary storage unit 53, the external interface 54, the first microphone M01, and the second microphone M02 are mutually connected through a bus 59.

## Claims

1. An information processing apparatus comprising:
a plurality of cores that perform a plurality of respective tasks in parallel; and
a plurality of cache memories that are provided corresponding to each of the plurality of cores and that store data to be referred to by the corresponding task at the time of execution, and
wherein at least one of the plurality of cores is configured to:
specify, for each of the cores, an overlap between the data referred to by the task that has been executed at the time of execution and data to be referred to by the task that is not yet executed at the time of execution, and
executes the task that is not yet executed in a core having the largest overlap among the plurality of cores.

2. The information processing apparatus according to claim 1, wherein
the at least one of the plurality of cores is configured to identify the data to be referred to by the task that is not yet executed at the time of execution, based on task information in which the task is associated with reference information for identifying the data to be referred to by the task that is not yet executed at the time of execution.

3. The information processing apparatus according to claim 1 or 2,
wherein a source program describing the task includes a clause for specifying the data to be used in the task, and
wherein the data specified in the clause is included, as the reference information, in an execution program obtained by compiling the source program.

4. The information processing apparatus according to any preceding claim, wherein
the at least one of the plurality of cores is configured to:
identify a combination in which the overlap becomes largest among combinations of the plurality of tasks that are not yet executed and the plurality of cores, and
execute the task in the identified combination in the core in the identified combination.

5. A program for causing a computer to execute processing comprising:
identifying, for each of cores that perform a plurality of respective tasks in parallel, an overlap between data referred to by a task that has been executed at the time of execution and data to be referred to by the task that is not yet executed at the time of execution, data to be referred to by the corresponding task at the time of execution being stored by a plurality of cache memories provided corresponding to each of the plurality of cores; and
executing the task that is not yet executed in a core having the largest overlap among the plurality of cores.
